# EUROPÄISCHE PATENTSCHRIFT

(11) **EP 3 056 757 B1**
(45) Veröffentlichungstag und Bekanntmachung des Hinweises auf die Patenterteilung: **13.03.2019**
(21) Anmeldenummer: 15154430.1
(22) Anmeldetag: 10.02.2015
(51) Int. Cl.: F16F 15/121, F16F 15/133, F16F 1/06, F16F 1/12, F16F 3/04

(54) **Schenkelfeder und Drehschwingungsdämpfer**
Leg spring and torsional vibration damper
Ressort spiralé et amortisseur de vibrations torsionnelles

(43) Veröffentlichungstag der Anmeldung: 17.08.2016
(73) Patentinhaber: Federntechnik Knörzer GmbH, 72793 Pfullingen (DE)
(72) Erfinder: Knörzer, Thomas, 72793 Pfullingen (DE)
(74) Vertreter: Klocke, Peter

(56) Entgegenhaltungen:
- DE-A1- 2 502 962
- DE-A1- 10 223 372
- DE-B3-102005 042 037
- DE-C- 194 273
- US-A1- 2012 102 936

## Beschreibung

Die Erfindung betrifft eine Schenkelfeder mit den Merkmalen des Oberbegriffs des Anspruchs 1, einen Drehschwingungsdämpfer mit einer oder mehreren solcher Schenkelfedern gemäß dem Oberbegriff des Anspruchs 7 und eine Anordnung mit zwei Bauteilen, die um eine Schwenkachse gegeneinander schwenkbar sind, gemäß dem Oberbegriff des Anspruchs 12.

Schenkelfedern sind bekannt. Sie weisen eine Federwicklung in Form einer Schraubenfeder auf, deren beide Enden als Federschenkel nach außen, typischerweise tangential, abstehen. Zum Spannen werden die Federschenkel gegensinnig in Radialebenen der Federwicklung und quer zu den Federschenkeln belastet. Die Belastung wirkt entsprechend dem Abstand der Federschenkel in zwei um eine axiale Länge der Federwicklung voneinander beabstandeten Ebenen und bewirkt deswegen ein Kippmoment auf die Schenkelfeder um eine Radialachse der Federwicklung. Die Schenkelfeder muss gegen das Kippmoment gehalten werden, typischerweise durch einen Dorn, der in die Federwicklung greift.

Um ein Kippmoment bei Belastung der Federschenkel zu vermeiden schlägt die Offenlegungsschrift DE 34 02 991 A1 eine Schenkelfeder mit zwei gegenläufig gewickelten Federwicklungen unterschiedlicher Durchmesser vor, die gleichachsig ineinander angeordnet und deren eine Enden einstückig miteinander sind. Federschenkel stehen tangential und in einer Radialebene von anderen Enden der beiden Federwicklungen ab. Die beiden Federschenkel lassen sich zum Spannen der Schenkelfeder zusammen oder auseinander beaufschlagen, wobei an den beiden Federschenkeln angreifende Kräfte auf einer Geraden wirken, so dass kein Moment bewirkt wird. Die bekannte Schenkelfeder lässt sich dadurch fliegend lagern, womit gemeint ist, dass die Federwicklungen nicht mit einem Dorn, Gehäuse oder dgl. gehalten sind, sondern ausschließlich die Kräfte zum Spannen der Schenkelfeder an den beiden Federschenkeln angreifen.

Die Patentschrift DE 194 273 C offenbart eine Schenkelfeder mit zwei gleichläufigen Federwicklungen, die aus einem Federdraht gewickelt sind, so dass eine Enden der beiden Federwicklungen einstückig ineinander übergehen. Andere Enden der beiden Federwicklungen sind als Kurzschenkel in radialer Richtung nach innen in die Federwicklungen hinein gebogen und kürzer als ein Durchmesser der Federwicklungen, so dass die Kurzschenkel innerhalb der Federwicklungen enden.

Das Patent DE 10 2005 042 037 B3 offenbart eine Schenkelfeder mit zwei gegenläufigen Federwicklungen, die ebenfalls aus einem Federdraht gewickelt sind, so dass eine Enden der beiden Federwicklungen einstückig ineinander übergehen. Andere Enden der beiden Federwicklungen stehen als Federschenkel tangential von einander nahen Seiten der Federwicklungen und parallel zu einander nach außen ab. Die Federwicklungen weisen einen Abstand voneinander auf, der ungefähr ihrem Durchmesser entspricht.

Aufgabe der Erfindung ist, eine Schenkelfeder mit zwei Federwicklungen vorzuschlagen, deren Federwindungen beim Federn nicht aneinander reiben. Weitere Aufgaben der Erfindung ein Drehschwingungsdämpfer mit einer oder mehreren solchen Schenkelfedern und eine gelenkige Anordnung zweier Bauteile, die um eine Schwenkachse gegeneinander schwenkbar sind, mit einer solchen Schenkelfeder.

Diese Aufgaben werden erfindungsgemäß durch die Merkmale der Ansprüche 1 und 7 und 12 gelöst. Die erfindungsgemäße Schenkelfeder mit den Merkmalen des Anspruchs 1 weist zwei Federwicklungen auf, die gegenläufig gewickelt und parallel nebeneinander angeordnet sind. Ein Abstand der beiden Federwicklungen voneinander ist nicht größer als ein Drahtdurchmesser der Schenkelfeder. Von einen Enden der Federwicklungen stehen Federschenkel zum Aufbringen von Kräften zum Spannen der Schenkelfeder ab. Andere Enden der Federwicklungen sind miteinander verbunden.

Die erfindungsgemäße Schenkelfeder lässt sich fliegend lagern, d. h. ohne Dorn in mindestens einer der beiden Federwicklungen oder sonstige Halteelemente ausschließlich an den Stellen der Federschenkel halten, an denen die Kräfte zum Spannen der Schenkelfeder eingeleitet werden. Die Kräfte können auf einer Geraden wirken, ohne ein Moment auf die Schenkelfeder zu erzeugen. Durch den geringen Abstand der beiden Federwicklungen voneinander gelangen die Federwicklungen aneinander, wenn die Federschenkel beim Spannen der Schenkelfeder zueinander bewegt werden. Durch die gegenläufige Wicklung der Federwicklungen wälzen Federwindungen der Federwicklungen aufeinander ohne aneinander zu reiben, wenn die Federschenkel zum Spannen der Schenkelfeder aufeinander zu bewegt werden. Die Schenkelfeder muss deswegen nicht geschmiert werden und weist keinen Verschleiß, jedenfalls nahezu keinen Reibverschleiß, auf. Durch die Reibungsfreiheit weist die erfindungsgemäße Schenkelfeder ein gutes Ansprechverhalten ohne Losbrechkraft oder Losbrechmoment auf. Die beiden Federwicklungen sind insbesondere schraubenlinienförmig gewickelt, d. h. sie weisen konstante Durchmesser und Steigungen auf. Allerdings schließt die Erfindung sich ändernde Durchmesser und/oder Steigungen der Federwicklungen nicht aus. Innerhalb der Federwicklungen können die Federwindungen aneinander anliegen oder Abstand voneinander aufweisen.

Die miteinander verbundenen anderen Federschenkel können beispielsweise durch Schweißen oder Stecken in ein Rohr miteinander verbunden sein, wobei die Aufzählung beispielhaft und nicht abschließend ist. Vorzugsweise gehen die anderen Enden der Federwicklungen einstückig ineinander über, d. h. die beiden Federwicklungen sind aus einem Federdraht gewickelt.

Eine Ausgestaltung der Erfindung sieht bei unbelasteter Schenkelfeder aneinander anliegende Federwicklungen vor.

Vorzugsweise stehen die Federschenkel an den einen Enden der Federwicklungen an voneinander beabstandeten Stellen der Federwicklungen ab, also nicht von den aneinander anliegenden oder jedenfalls nahen Stellen der Federwicklungen. Die Federschenkel können parallel zueinander, schräg auseinander oder schräg zueinander abstehen, wobei letzteres einen Federweg bis die Federschenkel gegeneinander stoßen, verkürzt.

Eine Ausgestaltung der Erfindung sieht eine Vorspanneinrichtung vor, die die Schenkelfeder unter einer Vorspannung hält, wenn sie nicht von außen belastet ist. Die Vorspanneinrichtung stellt sicher, dass die Schenkelfeder nur in einer Federrichtung verformt wird und vermeidet eine Wechselbeanspruchung der Schenkelfeder. Die Schenkelfeder wird entweder im Sinne kleiner werdender oder größer werdender Durchmesser ihrer Federwicklungen verformt.

Die erfindungsgemäße Schenkelfeder ist auch als Schwenkgelenk nach Art eines Scharniers verwendbar, es lassen sich zwei Bauteile mit einer oder mehreren gleichachsig angeordneten erfindungsgemäßen Schenkelfedern ohne zusätzliches Gelenk, Scharnier oder dgl. schwenkbar und in Schwenkrichtung federnd miteinander verbinden. Das ist jedenfalls bei niedrigen bis mittleren mechanischen Belastungen des Gelenks möglich.

Drehschwingungsdämpfer werden zur Dämpfung von Drehschwingungen von Verbrennungsmotoren in Kraftfahrzeugen verwendet. Sie sind üblicherweise zwischen dem Verbrennungsmotor und einem Getriebe angeordnet und weisen zwei Bauteile auf, die um eine gemeinsame Drehachse drehbar und gegeneinander verdrehbar sind und durch elastische Übertragungselemente drehelastisch miteinander verbunden sind. Das eine Bauteil dient einem Antrieb, es wird vom Verbrennungsmotor angetrieben, das andere dient einem Abtrieb, es treibt das Getriebe an. Solche Drehschwingungsdämpfer können auch als drehelastische Kupplungen aufgefasst werden. Ein Beispiel eines solchen Drehschwingungsdämpfers offenbart die Offenlegungsschrift DE 44 20 927 A1, bei der die beiden drehbaren und gegeneinander verdrehbaren Bauteile durch zwei Schraubendruckfedern in einer Drehrichtung drehelastisch miteinander verbunden sind, die jeweils auf Halbkreisbögen angeordnet sind und deren eine Enden sich an einem und deren andere Enden sich an einem anderen der beiden Bauteile abstützen.

Der erfindungsgemäße Drehschwingungsdämpfer mit den Merkmalen des Anspruchs 7 weist eine oder mehrere Schenkelfedern mit zwei parallel nebeneinander angeordneten und gegenläufigen Federwicklungen der vorstehend erläuterten Art auf, zwei um eine gemeinsame Drehachse drehbare und gegeneinander verdrehbare Bauteile des Drehschwingungsdämpfers drehelastisch in zumindest einer Drehrichtung miteinander verbinden. Ein Vorteil der Erfindung ist, dass die Federwindungen der Federwicklungen bei einem Verdrehen der beiden Bauteile des Drehschwingungsdämpfers gegeneinander und einem dadurch verursachten Spannen der Schenkelfedern aufeinander wälzen und nicht reibungsverursachend aufeinander gleiten. Die Schenkelfedern des erfindungsgemäßen Drehschwingungsdämpfers müssen deswegen nicht geschmiert sein bzw. werden und die Reibungsarmut verbessert ein Ansprechverhalten und dadurch eine Dämpfungswirkung des Drehschwingungsdämpfers. Der erfindungsgemäße Drehschwingungsdämpfer kann auch als drehelastische Kupplung oder als Zweimassenschwungrad aufgefasst werden, wobei in letzterem Fall die beiden Bauteile Schwungmassen sind bzw. als solche oder als Schwungräder ausgebildet werden.

Eine Ausgestaltung der Erfindung sieht eine exzentrische Anordnung der Schenkelfedern mit ihren Federwicklungen außerhalb der Drehachse des Drehschwingungsdämpfers vor. Die Federwicklungen der Schenkelfedern können beispielsweise auf einem Kreis um die Drehachse herum mit nach außen abstehenden Federschenkeln angeordnet werden. Andere Anordnungen der Schenkelfedern schließt die Erfindung nicht aus. Die nach außen stehenden Federschenkel greifen mit großem Abstand von der Drehachse und damit mit großen Hebeln an den beiden gegeneinander verdrehbaren Bauteilen des Drehschwingungsdämpfers an, wodurch bei einem gegebenen Moment zwischen den beiden Bauteilen auf die Federschenkel ausgeübte Kräfte niedrig sind.

In bevorzugter Ausgestaltung der Erfindung sind die Schenkelfedern fliegend gelagert, d. h. es gibt keinen in die Federwicklungen eingreifenden Dorn oder die Federwicklungen außen haltende Halterungen, sondern es sind nur die Federschenkel der Schenkelfedern an den beiden gegeneinander verdrehbaren Bauteilen des Drehschwingungsdämpfers gehalten. Sicherheitseinrichtungen in oder außerhalb der Federwicklungen, die die Schenkelfedern im Falle eines Federbruchs oder eines Aushängens der Federschenkel halten, können vorhanden sein. Allerdings sind solche Sicherheitseinrichtungen so gestaltet und angeordnet, dass sie die Schenkelfedern in einem normalen Betrieb des Drehschwingungsdämpfers nicht berühren. Erforderlich kann eine Halterung der Schenkelfedern gegen Fliehkraft sein, die die Schenkelfedern jedenfalls bei hohe Drehzahl berühren.

Eine Ausgestaltung der Erfindung sieht vor, dass Federwicklungen benachbarter Schenkelfedern einander berühren. Da die Federwicklungen gegenläufig sind, wälzen die Federwindungen der Federwicklungen bei einem Spannen der Schenkelfedern durch Verdrehen der beiden Bauteile des Drehschwingungsdämpfers gegeneinander reibungsarm aufeinander. Die Schenkelfedern lassen sich auf diese Weise platzsparend unterbringen und stützen einander gegenseitig ab.

Eine Ausgestaltung der Erfindung sieht vor, dass bei nicht gegeneinander verdrehten Bauteilen die Federwicklungen der Schenkelfedern einen Abstand voneinander aufweisen und durch Verdrehung der beiden Bauteile gegeneinander in Berührung miteinander kommen. Es können die beiden Federwicklungen der Schenkelfedern und/oder Federwicklungen benachbarter Schenkelfedern den erläuterten Abstand voneinander aufweisen.

Die erfindungsgemäße gelenkige Anordnung mit den Merkmalen des Anspruchs 12 weist zwei Bauteile auf, die um eine Schwenkachse gegeneinander schwenkbar sind. Das können beispielsweise Gelenkarme, Klappen, Deckel, Hauben, Scharniere, Hebel usw. sein. Die Anordnung weist eine erfindungsgemäße Schenkelfeder auf, deren Federschenkel an den beiden Bauteilen angreifen. Bei einem Verschwenken der beiden Bauteile gegeneinander in einer Richtung spannen die beiden Bauteile die Schenkelfeder federelastisch, so dass die erfindungsgemäße Schenkelfeder die beiden Bauteile in einer entgegengesetzten Schwenkrichtung beaufschlagt. Erfindungsgemäß ist die Schenkelfeder außerhalb der Schwenkachse so angeordnet, dass sich die Schwenkachse der beiden Bauteile im Zentrum eines Bogens befindet, den einer der beiden Federschenkel beim Schwenken der beiden Bauteile gegeneinander und dem dadurch erfolgenden federelastischen Spannen oder Entspannen der Schenkelfeder beschreibt. Ein reibungsverursachendes Gleiten der Federschenkel entlang der beiden Bauteile beim Schwenken wird vermieden.

Die Erfindung wird nachfolgend anhand in der Zeichnung dargestellter Ausführungsbeispiele näher erläutert. Es zeigen:
- Figur 1: eine Schenkelfeder gemäß der Erfindung in perspektivischer Ansicht;
- Figur 2: eine Stirnansicht eines Drehschwingungsdämpfers gemäß der Erfindung; und
- Figur 3: eine gelenkige Anordnung zweier Bauteile mit einer Schenkelfeder gemäß der Erfindung in Ansicht.

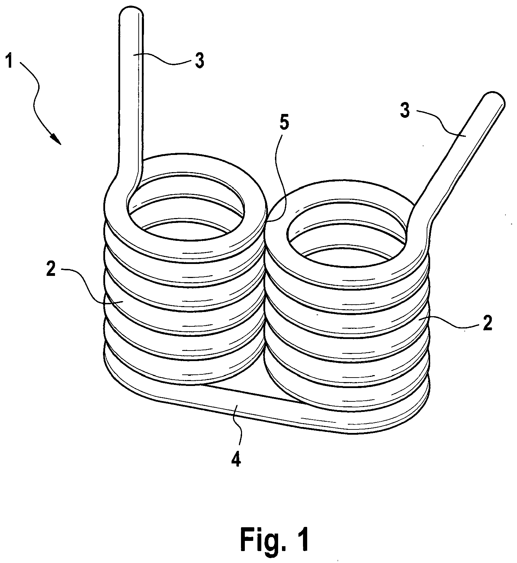

Die in Figur 1 dargestellte erfindungsgemäße Schenkelfeder 1 weist zwei Federwicklungen 2 auf, die parallel nebeneinander angeordnet und gegenläufig gewickelt sind, was kurz auch als gegenläufig bezeichnet werden kann. Die beiden Federwicklungen 2 sind wie Schraubenfedern schraubenlinienförmig und mit konstantem Durchmesser gewickelt, d. h. die Federwicklungen 2 sind zylinderförmig. Es ist allerdings auch ein sich ändernder Wicklungsdurchmesser der beiden Federwicklungen 2 möglich, beispielsweise kegelförmige Federwicklungen 2 (nicht dargestellt). Die beiden Federwicklungen 2 sind mit konstanter Steigung gewickelt, wobei auch eine sich ändernde Steigung der Federwicklungen 2 möglich ist.

An einander zugeordneten Enden weisen die beiden Federwicklungen 2 nach außen abstehende Federschenkel 3 auf, die zu Tangenten der Federwicklungen 2 um etwa eine Federdrahtdicke nach innen versetzt sind. Die beiden Federschenkel 3 befinden sich in einer gemeinsamen Radialebene zu den Federwicklungen 2, so dass sie zum Spannen der Federwicklungen 2 bzw. der Schenkelfeder 1 zusammen- oder auseinanderbewegbar sind ohne ein Kippmoment um eine Radialachse der Federwicklungen 2 oder ein anderes Moment zu verursachen, gegen das die Schenkelfeder 1 abgestützt werden müsste. Die Schenkelfeder 1 kann dadurch "fliegend" gelagert werden, d. h. nur an den Federschenkeln 3 zum Aufbringen einer Kraft zum Spannen der Schenkelfeder 1 gehalten werden und ohne Halterung, Abstützung oder dgl. der Federwicklungen 2.

Die Federschenkel 3 stehen an voneinander fernen Umfangsstellen der zugeordneten einen Enden der Federwicklungen 2 ab, wobei auch möglich ist, dass die Federschenkel 3 von anderen Umfangsstellen, beispielsweise einander nahen oder aneinander anliegenden Umfangsstellen der Federwicklungen 2 abstehen (nicht dargestellt). Die Federschenkel 3 stehen schräg auseinander, wobei auch parallele oder schräg aufeinander zu verlaufende Federschenkel 3 möglich sind (nicht dargestellt). Die Federschenkel 3 müssen nicht gerade, sondern können beispielsweise auch gekrümmt sein bzw. einen beliebigen Verlauf aufweisen. Auch Haken, Ösen oder dgl. an Enden der Federschenkel 3 sind möglich (nicht dargestellt).

Die Schenkelfeder 1 ist aus einem einzigen Federdraht gewickelt, an einander zugeordneten anderen Enden gehen die Federwicklungen 2 einstückig ineinander über. Im Ausführungsbeispiel verläuft der Federdraht an einer Verbindungsstelle 4 der beiden Federwicklungen 2 gerade und tangential zu den Federwicklungen 2 von der einen zur anderen Federwicklung 2 der Schenkelfeder 1, wobei auch andere Verbindungsmöglichkeiten bestehen.

Die Federwicklungen 2 sind wie Schraubenzugfedern mit aneinander anliegenden Federwindungen innerhalb der Federwicklungen 2 gewickelt, wobei auch Ausführungsformen mit axial beabstandeten Federwindungen möglich sind. Die Federwindungen der beiden Federwicklungen 2 liegen an Berührstellen 5 aneinander an. Werden die Federschenkel 3 zum Spannen der Schenkelfeder 1 zusammengedrückt, wälzen die Federwindungen der beiden Federwicklungen 2 reibungs- und verschleißarm aufeinander. Eine Schmierung ist nicht notwendig. Aufgrund der gegenläufigen Federwicklungen 2 sind die Berührstellen 5 einander zugeordneter Federwindungen immer in gleicher Höhe, auch wenn sich die Federwindungen bei einem Spannen und Entspannen der Schenkelfeder 1 drehen. Es ist dadurch möglich, die Schenkelfeder 1 aus rundem Federdraht zu wickeln. Allerdings sind auch Federdrähte mit anderen Querschnittsformen, beispielsweise quadratische Federdrähte für die Schenkelfeder 1 möglich. Auch ist ein kleiner Abstand zwischen den Federwicklungen 2 von vorzugsweise nicht mehr als einem Durchmesser des Federdrahts möglich (nicht dargestellt). Bei einem Zusammendrücken der Federschenkel 3 zum Spannen der Schenkelfeder 1 gelangen in diesem Fall die Federwindungen der beiden Federwicklungen 2 in Anlage aneinander und wälzen ab dann in beschriebener Weise aufeinander, wenn die Schenkelfeder 1 stärker gespannt wird.

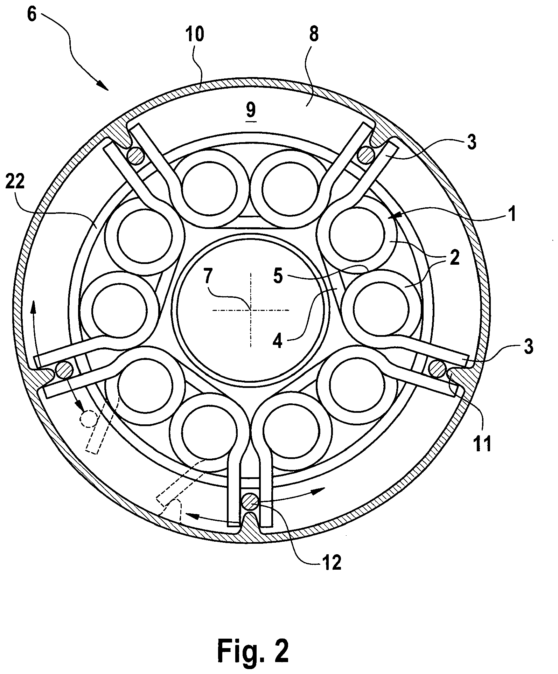

Der in Figur 2 dargestellte erfindungsgemäße Drehschwingungsdämpfer 6, der auch als drehelastische Kupplung aufgefasst werden kann, weist zwei gleichachsig angeordnete und um eine gemeinsame Drehachse 7 drehbare und gegeneinander verdrehbare Bauteile 8 auf. Von den beiden Bauteilen 8 ist nur eines gezeichnet, weil ein anderes, dem Betrachter zugewandtes Bauteil den Blick auf Schenkelfedern 1 des Drehschwingungsdämpfers 6 versperren würde. Das eine Bauteil 8 des Drehschwingungsdämpfers 6 weist eine kreislochscheibenförmige Stirnwand 9 und eine zylinderrohrförmige Umfangswand 10 auf. Von der Umfangswand 10 stehen achsparallele Rippen 11 nach innen ab, die in gleichen Abständen in Umfangsrichtung angeordnet sind.

Das andere, nicht gezeichnete drehbare Bauteil des Drehschwingungsdämpfers 6 ist kreislochscheibenförmig mit gleichen Abmessungen wie die Stirnwand 9 des einen Bauteils 8. Von dem anderen, nicht gezeichneten Bauteil stehen Zapfen 12 achsparallel in Richtung der Stirnwand 9 des einen Bauteils 8 ab. Das andere Bauteil weist gleichviel Zapfen 12 wie das eine Bauteil 8 Rippen 11 auf, die Zapfen 12 befinden sich radial innerhalb der Rippen 11 (die Zapfen 12 sind näher an der Drehachse 7 als die Rippen 8), so dass sie die Verdrehbarkeit der beiden Bauteile 8 gegeneinander nicht behindern.

Zwischen den beiden Bauteilen 8 des Drehschwingungsdämpfers 6 sind Schenkelfedern 1 angeordnet, von denen eine in Figur 1 dargestellt und oben erläutert worden ist. Die gegeneinander verdrehbaren Bauteile 8 des Drehschwingungsdämpfers 6 weisen gleich viele Rippen 11 und Zapfen 12 wie Schenkelfedern 1 auf, im Ausführungsbeispiel also fünf Rippen 11 und fünf Zapfen 12. Im Ausführungsbeispiel weist der Drehschwingungsdämpfer 6 fünf Schenkelfedern 1 auf, wobei die Anzahl der Schenkelfedern 1 grundsätzlich beliebig ist. Die Federwicklungen 2 der Schenkelfedern 1 sind achsparallel angeordnet und befinden sich auf einem gedachten und zur Drehachse 7 des Drehschwingungsdämpfers 6 koaxialen Kreis. Die Federschenkel 3 stehen nach außen und liegen an den Rippen 11 des einen Bauteils 8 und den Zapfen 12 des anderen, nicht gezeichneten Bauteils des Drehschwingungsdämpfers 6 an. In der gezeichneten Stellung des Drehschwingungsdämpfers 6, in der die beiden Bauteile 8 nicht gegeneinander verdreht sind, befinden sich die Rippen 11 und die Zapfen 12 zwischen jeweils zwei benachbarten Schenkeln 3 benachbarter Schenkelfedern 1. Die unverdrehte Stellung kann auch als nicht ausgelenkte Stellung der beiden drehbaren und gegeneinander verdrehbaren Bauteile 8 des Drehschwingungsdämpfers 6 bezeichnet werden. Es liegen nicht nur die Federwindungen der beiden Federwicklungen 2 der einzelnen Schenkelfedern 1 aneinander an, sondern die Schenkelfedern 1 sind so im Drehschwingungsdämpfer 6 angeordnet, dass die Federwindungen benachbarter Federwicklungen 2 benachbarter Schenkelfedern 1 aneinander anliegen. Auf diese Weise stützen sich die Schenkelfedern 1 aneinander ab.

Die Schenkelfedern 1 sind fliegend zwischen den beiden Bauteilen 8 des Drehschwingungsdämpfers 6 gelagert, sie liegen nur mit ihren Federschenkeln 3 an den Rippen 11 und den Zapfen 12 sowie die Federwindungen der Federwicklungen 2 aneinander an. Außer an den Rippen 11 und den Zapfen 12 berühren die Schenkelfedern 1 die Bauteile 8 des Drehschwingungsdämpfers 6 nicht, sind allerdings durch die Anordnung zwischen den beiden Bauteilen 8 in axialer Richtung, durch die Anlage der Federwindungen der Federwicklungen 2 benachbarter Schenkelfedern 1 nach innen und durch eine Lage von Enden der Federschenkel 3 nahe einer Innenseite der Umfangswand 10 des einen Bauteils 8 nach außen gesichert. Es gibt keine Dorne, die in die Federwicklungen 2 eingreifen, Halterungen außen an den Federwicklungen 2 oder dgl. zum Halten der Schenkelfedern 1. Eine Halterung 22, die die Schenkelfedern 1 gegen Fliehkraft hält, kann vorhanden sein. Im Ausführungsbeispiel ist eine solche Halterung 22 in Form eines Rohrs vorhanden, das die Federwicklungen 2 außen umschließt und sich auf derselben Seite der Federschenkel 3 befindet wie die Federwicklungen 2. Axial ist das Rohr so lang wie die Federwicklungen 2. Die Halterung 22 ist lose zwischen den beiden gegeneinander verdrehbaren Bauteilen 8 des Drehschwingungsdämpfers 6 angeordnet. Die Halterung 22 ist nicht für alle Ausführungen des Drehschwingungsdämpfers 6 zwingend.

Eine Verdrehung der beiden Bauteile 8 des Drehschwingungsdämpfers 6 gegeneinander, die wie gesagt auch als Auslenkung bezeichnet werden kann und die einer Drehung des Drehschwingungsdämpfers 6, d. h. einer gemeinsamen Drehung seiner beiden Bauteile 8 überlagert ist, ist in Figur 2 links unten für eine der Schenkelfedern 1 mit Strichlinien dargestellt. Bei der Verdrehung der beiden Bauteile 8 gegeneinander bewegen sich die Rippen 11 und die zugeordneten Zapfen 12 in Umfangsrichtung auseinander, einander benachbarte Rippen 11 und Zapfen 12 nähern sich. Dadurch werden die nach außen stehenden Federschenkel 3 der Schenkelfedern 1 zusammengedrückt, d. h. die Schenkelfedern 1 werden gespannt und erzeugen ein Rückstellmoment in Richtung der Ausgangslage, in der die beiden Bauteile 8 des Drehschwingungsdämpfers 6 nicht gegeneinander verdreht sind und die Zapfen 12 sich radial innerhalb der Rippen 11 befinden. Beim Spannen der Schenkelfedern 1 wälzen nicht nur die Federwindungen der beiden Federwicklungen 2 der Schenkelfedern 1 aufeinander, sondern es wälzen auch die Federwindungen benachbarter Federwicklungen 2 benachbarter Schenkelfedern 1 aufeinander. Das Spannen der Schenkelfedern 1 ist dadurch reibungs- und verschleißarm, die Schenkelfedern 1 benötigen keine Schmierung. Ebenfalls ist die Verdrehung der beiden Bauteile 8 des Drehschwingungsdämpfers 6 reibungsarm, aufgrund der Reibungsarmut weist der Drehschwingungsdämpfer 6 kein oder ein allenfalls vernachlässigbares Losbrechmoment zum Verdrehen der beiden Bauteile 8 gegeneinander auf und spricht infolgedessen leichtgängig an.

Der erfindungsgemäße Drehschwingungsdämpfer 6 ist zu einer Anordnung in Kraftfahrzeugen mit Verbrennungsmotor vorgesehen, er wird zwischen einem Verbrennungsmotor und einem Getriebe vor oder nach einer Kupplung angeordnet, wobei ein Bauteil 8 des Drehschwingungsdämpfers 6 drehfest mit einer Kurbelwelle des Verbrennungsmotors oder mit einem Eingang der Kupplung und das andere Bauteil drehfest mit einem Ausgang der Kupplung oder mit einer Eingangswelle des Getriebes verbunden wird. Es kann auch eines der beiden Bauteile 8 des Drehschwingungsdämpfers 6 als Kupplungsscheibe ausgebildet sein oder eine mit dem Bauteil drehfest verbundene Kupplungsscheibe aufweisen (nicht dargestellt). Eines oder beide Bauteile 8 des Drehschwingungsdämpfers 6 können auch als Schwungmassen bzw. Schwungräder ausgebildet sein.

Wie zur Schenkelfeder 1 oben zu Figur 1 erläutert, können die beiden Federwicklungen 2 der Schenkelfedern 1 und/oder benachbarte Federwicklungen 2 benachbarter Schenkelfedern 1 des Drehschwingungsdämpfers 6 einen kleinen Abstand von insbesondere nicht mehr als dem Durchmesser des Federdrahts der Schenkelfedern 1 aufweisen, so dass sich die Federwindungen der Federwicklungen 2 bei unverdrehten Bauteilen 8 des Drehschwingungsdämpfers nicht berühren sondern erst dann berühren, wenn durch Verdrehung der Bauteile 8 des Drehschwingungsdämpfers 6 gegeneinander die Schenkelfedern 1 gespannt werden. Diese nicht dargestellte Maßnahme verringert ein Losbrechmoment, das zum Verdrehen der beiden Bauteile 8 gegeneinander notwendig ist, noch weiter auf ein Minimum. Kommen die Federwindungen der Federwicklungen 2 der Schenkelfedern 1 und/oder benachbarter Schenkelfedern 1 beim Spannen der Schenkelfedern 1 durch Verdrehen der Bauteile 8 des Drehschwingungsdämpfers 6 gegeneinander in Anlage aneinander, wälzen die Federwindungen der Federwicklungen 2 in beschriebener Weise aufeinander.

Auch wenn der Drehschwingungsdämpfer 6 entgegengesetzt ausgelenkt, d. h. seine beiden Bauteile 8 in entgegengesetzter Richtung gegeneinander verdreht werden, werden die Federschenkel 3 zusammengedrückt und nicht auseinander gezogen, so dass die Schenkelfedern 1 immer in derselben Richtung gespannt werden. Es erfolgt keine Wechselbelastung der Schenkelfedern 1 durch Zusammendrücken und Auseinanderziehen der Federschenkel 3, sondern wie gesagt werden die Federschenkel 3 unabhängig von einer Richtung, in der die beiden Bauteile 8 des Drehschwingungsdämpfers 6 gegeneinander verdreht werden, immer zusammengedrückt. Eine Dauerhaltbarkeit der Schenkelfedern 1 ist dadurch höher als bei Wechselbelastung.

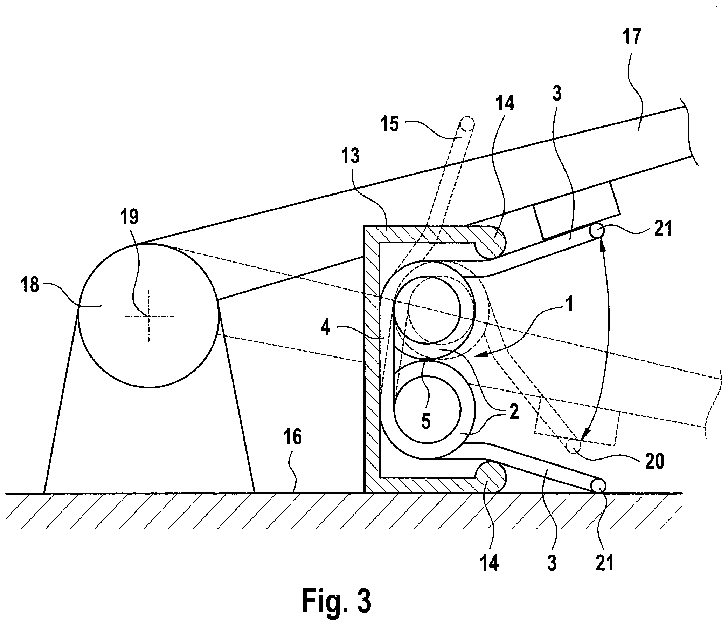

Bei der in Figur 3 gezeichneten Ausführungsform der Erfindung weist die Schenkelfeder 1 eine klammerförmige Vorspanneinrichtung 13 auf, die die beiden Federwicklungen 2 umgreift. Die Vorspanneinrichtung 13 weist zylindrische Widerlager 14 für die Federschenkel 3 auf, die parallel zu den Federwicklungen 2 angeordnet sind. An den Widerlagern 14 liegen die Federschenkel 3 mit einer konkaven Abwinklung an, die sich zwischen der jeweiligen Federwicklung 2 und einem freien Ende der Federschenkel 3 befindet. Die Vorspanneinrichtung 13 hält die Federschenkel 3 elastisch zusammengedrückt und damit die Schenkelfeder 1 unter Vorspannung. Ein entspannter Zustand des einen Federschenkels 3 ist mit Strichlinien dargestellt und mit der Bezugszahl 15 versehen. Die Vorspanneinrichtung 13 stellt eine Beanspruchung der Schenkelfeder 1 stets in derselben Richtung sicher, nämlich im Ausführungsbeispiel ein Zusammendrücken der Federschenkel 3 und eine Verkleinerung eines Radius der Federwicklungen 2. Eine Wechselbeanspruchung, bei der die Federschenkel über die entspannte Lage hinweg auseinander bewegt würden, ist ausgeschlossen. Die entspannte Lage ist wie gesagt mit der Bezugszahl 15 bezeichnet und mit Strichlinien gezeichnet.

Die Schenkelfeder 1 ist an einem Gestell 16 mit einem Gelenkarm 17 angeordnet, der mit einem Gelenk 18 um eine Schwenkachse 19 schwenkbar mit dem Gestell 16 verbunden ist. Der Gelenkarm 17 und das Gestell 16 können allgemein auch als zwei Bauteile 16, 17 aufgefasst werden, die um die Schwenkachse 19 gegeneinander schwenkbar sind. Insgesamt kann die Anordnung als gelenkige Anordnung mit den beiden gegeneinander schwenkbaren Bauteilen 16, 17 aufgefasst werden, die von der Schenkelfeder 1 in einer Schwenkrichtung beaufschlagt werden, im Ausführungsbeispiel auseinander. Die Schenkelfeder 1 ist zwischen dem Gestell 16 und dem Gelenkarm 17 angeordnet, freie Enden der Federschenkel 3 liegen an einander zugewandten Seiten des Gestells 16 und des Gelenkarms 17 an und drücken diese auseinander. Für eine gute Anlage am Gestell 16 und am Gelenkarm 17 weisen die Federschenkel 3 bei dieser Ausgestaltung rechtwinklige Abwinklungen 21 auf, die parallel zu den Federwicklungen 2 verlaufen und die an den einander zugewandten Seiten des Gestells 16 und des Gelenkarms 17 anliegen. Die Federwicklungen 2 sind parallel zu und mit Abstand von der Schwenkachse 19 angeordnet.

Die Vorspanneinrichtung 13 ist am Gestell 16 angebracht und hält die Schenkelfeder 1 wie oben beschrieben unter einer Vorspannung. Wird der Gelenkarm 17 weiter vom Gestell 16 weg geschwenkt, hebt er von einem Federschenkel 3 ab und die Schenkelfeder 1 ist wirkungslos. Wird der Gelenkarm 17 näher zum Gestell 16 geschwenkt, drückt er die Federschenkel 3 zusammen und erhöht eine Federspannung der Schenkelfeder 1 über die Vorspannung, die die Vorspanneinrichtung 13 bewirkt. Das Schwenken des Gelenkarms 17 kann allgemein auch als Schwenken der beiden Bauteile 16, 17 gegeneinander aufgefasst werden. Der eine Federschenkel 3 hebt vom zugeordneten Widerlager 14 der Vorspanneinrichtung 13 ab und bewegt sich bis maximal in die mit Strichlinien gezeichnete und mit 20 bezeichnete Stellung bzw. maximal bis in Anlage am anderen Federschenkel 3. Die elastische Verformung der Schenkelfeder 1 bewirkt eine Kraft, die den Gelenkarm 17 vom Gestell 16 weg drückt, unterstützt also ein Rückschwenken in eine Ausgangslage. Wird der Gelenkarm 17 beim Spannen der Schenkelfeder 1 nach unten bewegt, unterstützt die Schenkelfeder 1 ein Anheben des Gelenkarms 17 oder hebt ihn sogar selbst an. Beim Zusammendrücken der Federschenkel 3 bewegt sich die eine Federwicklung 2 auf einer Kreisbahn (jedenfalls nahezu einer Kreisbahn) um eine Achse der anderen Federwicklung 2, wobei sich beide Federwicklungen 2 elastisch verformen und ihre Durchmesser verkleinern. Federwindungen der beiden Federwicklungen 2 wälzen aufeinander. Der am Gelenkarm 17 anliegende Federschenkel 3 bewegt sich in einem Bogen. Die Schenkelfeder 1 ist mit Abstand von der Schwenkachse 19 so angeordnet, dass sie in einem Zentrum des Bogens liegt, auf dem sich der am Gelenkarm 17 anliegende Federschenkel 3 bewegt. Dadurch verschieben sich die am Gestell 16 und am Gelenkarm 17 anliegenden Enden bzw. Abwinklungen der Federschenkel 3 nicht gegenüber dem Gestell 16 und dem Gelenkarm 17, so dass beim Schwenken des Gelenkarms 17 und Spannen der Schenkelfeder 1 keine Reibung und kein Verschleiß zwischen der Schenkelfeder 1 und dem Gestell 16 sowie dem Gelenkarm 17 entsteht. Ebenfalls bewirkt das Schwenken des Gelenkarms 17 und das Spannen der Schenkelfeder 1 kein Kippmoment auf die Schenkelfeder 1 um eine Kippachse radial zu den Federwicklungen 2, weil sich die Federschenkel 3 in einer Ebene befinden und Kräfte nur in dieser Ebene wirken.

## Patentansprüche

1. Schenkelfeder mit zwei gegenläufigen Federwicklungen (2), von deren einen Enden Federschenkel (3) abstehen, **dadurch gekennzeichnet, dass** die beiden Federwicklungen (2) parallel nebeneinander angeordnet sind, wobei ein Abstand der Federwicklungen (2) nicht größer als ein Durchmesser eines Federdrahts der Schenkelfeder (1) ist und wobei andere Enden der Federwicklungen (2) miteinander verbunden sind.

2. Schenkelfeder nach Anspruch 1, **dadurch gekennzeichnet, dass** die anderen Enden der Federwicklungen (2) einstückig ineinander übergehen.

3. Schenkelfeder nach Anspruch 1 oder 2, **dadurch gekennzeichnet, dass** die Federwicklungen (2) einander berühren.

4. Schenkelfeder nach einem der vorhergehenden Ansprüche, **dadurch gekennzeichnet, dass** die Federschenkel (3) an den einen Enden der Federwicklungen (2) an voneinander beabstandeten Stellen der Federwicklungen (2) abstehen.

5. Schenkelfeder nach einem der vorhergehenden Ansprüche, **dadurch gekennzeichnet, dass** die Schenkelfeder (1) eine Vorspanneinrichtung (13) aufweist, die die Federschenkel (3) unter Vorspannung hält.

6. Schenkelfeder nach einem der vorhergehenden Ansprüche, **dadurch gekennzeichnet, dass** die Schenkelfeder (1) ein Schwenkgelenk bildet.

7. Drehschwingungsdämpfer mit zwei um eine gleiche Drehachse (7) drehbaren und gegeneinander verdrehbaren Bauteilen (8), **dadurch gekennzeichnet, dass** die Bauteile (8) durch eine oder mehrere Schenkelfedern (1) gemäß einem der vorhergehenden Ansprüche drehelastisch miteinander verbunden sind.

8. Drehschwingungsdämpfer nach Anspruch 7, **dadurch gekennzeichnet, dass** die Federwicklungen (2) der Schenkelfedern (1) außerhalb der Drehachse (7) der drehbaren Bauteile (8) des Drehschwingungsdämpfers (6) angeordnet sind.

9. Drehschwingungsdämpfer nach Anspruch 7 oder 8, **dadurch gekennzeichnet, dass** die Schenkelfedern (1) fliegend gelagert sind.

10. Drehschwingungsdämpfer nach einem der Ansprüche 7 bis 9, **dadurch gekennzeichnet, dass** die Federwicklungen (2) benachbarter Schenkelfedern (1) einander berühren.

11. Drehschwingungsdämpfer nach einem der Ansprüche 7 bis 10, **dadurch gekennzeichnet, dass** bei nicht gegeneinander verdrehten Bauteilen (8) die Federwicklungen (2) einen Abstand voneinander aufweisen und durch Verdrehung der beiden Bauteile (8) gegeneinander in Berührung kommen.

12. Gelenkige Anordnung zweier um eine Schwenkachse (19) gegeneinander schwenkbarer Bauteile (16, 17), **dadurch gekennzeichnet, dass** die Anordnung eine Schenkelfeder (1) nach einem der Ansprüche 1 bis 6 aufweist, deren Federwicklungen (2) parallel zu der Schwenkachse (19) angeordnet sind und deren Federschenkel (3) mit einem Abstand von der Schwenkachse (19) an den beiden Bauteilen (16, 17) angreifen, und dass die Schwenkachse (19) der beiden Bauteile (16, 17) sich im Zentrum eines Bogens befindet, den einer der beiden Federschenkel (3) der Schenkelfeder (1) bei einem Verschwenken der beiden Bauteile (16, 17) gegeneinander beschreibt.

## Claims

1. Torsion spring comprising two contradirectional spring coils (2), from an end of each of which a spring leg (3) projects, **characterised in that** the two spring coils (2) are arranged next to one another so as to be parallel, a distance between the spring coils (2) not being greater than a diameter of a spring wire of the torsion spring (1), and other ends of the spring coils (2) being interconnected.

2. Torsion spring according to claim 1, **characterised in that** the other ends of the spring coils (2) transition into one another so as to be in one piece.

3. Torsion spring according to either claim 1 or claim 2, **characterised in that** the spring coils (2) are in contact with one another.

4. Torsion spring according to any of the preceding claims, **characterised in that** the spring legs (3) at an end of each of the spring coils (2) project from points on the spring coils (2) which are spaced apart from one another.

5. Torsion spring according to any of the preceding claims, **characterised in that** the torsion spring (1) comprises a preloading means (13) which holds the spring legs (3) under a preload.

6. Torsion spring according to any of the preceding claims, **characterised in that** the torsion spring (1) forms a pivot joint.

7. Torsional-vibration damper comprising two components (8) which can rotate about a common rotational axis (7) and can rotate relative to one another, **characterised in that** the components (8) are torsionally flexibly interconnected by one or more torsion springs (1) according to any of the preceding claims.

8. Torsional-vibration damper according to claim 7, **characterised in that** the spring coils (2) of the torsion springs (1) are arranged outside the rotational axis (7) of the rotatable components (8) of the torsional-vibration damper (6).

9. Torsional-vibration damper according to either claim 7 or claim 8, **characterised in that** the torsion springs (1) are mounted in a floating manner.

10. Torsional-vibration damper according to any of claims 7 to 9, **characterised in that** the spring coils (2) of adjacent torsion springs (1) are in contact with one another.

11. Torsional-vibration damper according to any of claims 7 to 10, **characterised in that** when components (8) are not rotated relative to one another, the spring coils (2) are spaced apart from one another and come into contact when the two components (8) are rotated relative to one another.

12. Articulated arrangement of two components (16, 17) which can be pivoted relative to one another about a pivot axis (19), **characterised in that** the arrangement comprises a torsion spring (1) according to any of claims 1 to 6, the spring coils (2) of which are arranged in parallel with the pivot axis (19) and the spring legs (3) of which act on the two components (16, 17) at a distance from the pivot axis (19), and **in that** the pivot axis (19) of the two components (16, 17) is located in the centre of an arc described by one of the two spring legs (3) of the torsion spring (1) when the two components (16, 17) are pivoted relative to one another.

## Revendications

1. Ressort à branches muni de deux enroulements (2) à sens opposés, à partir des unes des extrémités desquels des branches (3) dudit ressort font saillie, **caractérisé par le fait que** les deux enroulements (2) du ressort sont agencés en juxtaposition parallèle, sachant qu'une distance entre lesdits enroulements (2) du ressort n'excède pas un diamètre d'un fil métallique constituant ledit ressort (1) à branches, et sachant que d'autres extrémités desdits enroulements (2) dudit ressort sont reliées mutuellement.

2. Ressort à branches selon la revendication 1, **caractérisé par le fait que** les autres extrémités des enroulements (2) dudit ressort fusionnent mutuellement d'un seul tenant.

3. Ressort à branches selon la revendication 1 ou 2, **caractérisé par le fait que** les enroulements (2) dudit ressort sont en contact l'un avec l'autre.

4. Ressort à branches selon l'une des revendications précédentes, **caractérisé par le fait que** les branches (3) dudit ressort font saillie, au-delà des unes des extrémités des enroulements (2) dudit ressort, dans des zones desdits enroulements (2) dudit ressort qui sont mutuellement distantes.

5. Ressort à branches selon l'une des revendications précédentes, **caractérisé par le fait que** ledit ressort (1) à branches est muni d'un dispositif de précontrainte (13) qui maintient les branches (3) dudit ressort sous contrainte préalable.

6. Ressort à branches selon l'une des revendications précédentes, **caractérisé par le fait que** ledit ressort (1) à branches forme une articulation pivotante.

7. Amortisseur de vibrations de torsion, comprenant deux parties structurelles (8) pouvant subir une torsion mutuelle et tourner autour d'un même axe de rotation (7), **caractérisé par le fait que** les parties structurelles (8) sont reliées l'une à l'autre, avec élasticité rotatoire, par l'intermédiaire d'un ou de plusieurs ressort(s) (1) à branches conforme(s) à l'une des revendications précédentes.

8. Amortisseur de vibrations de torsion selon la revendication 7, **caractérisé par le fait que** les enroulements (2) des ressorts (1) à branches sont disposés à l'extérieur de l'axe de rotation (7) des parties structurelles rotatives (8) dudit amortisseur (6) de vibrations de torsion.

9. Amortisseur de vibrations de torsion selon la revendication 7 ou 8, **caractérisé par le fait que** les ressorts (1) à branches sont montés en porte-à-faux.

10. Amortisseur de vibrations de torsion selon l'une des revendications 7 à 9, **caractérisé par le fait que** les enroulements (2) de ressorts voisins (1) à branches sont en contact mutuel.

11. Amortisseur de vibrations de torsion selon l'une des revendications 7 à 10, **caractérisé par le fait que** les enroulements (2) des ressorts sont espacés l'un de l'autre lorsque les parties structurelles (8) ne subissent aucune torsion mutuelle, et entrent mutuellement en contact suite à une torsion imposée auxdites deux parties structurelles (8).

12. Ensemble articulé comprenant deux parties structurelles (16, 17) pouvant pivoter l'une par rapport à l'autre autour d'un axe de pivotement (19), **caractérisé par le fait que** ledit ensemble est pourvu d'un ressort (1) à branches conforme à l'une des revendications 1 à 6, dont les enroulements (2) sont agencés parallèlement à l'axe de pivotement (19), et dont les branches (3) viennent en prise avec les deux parties structurelles (16, 17) à distance dudit axe de pivotement (19) ; et **par le fait que** ledit axe de pivotement (19) des deux parties structurelles (16, 17) se situe au centre d'un arc de cercle décrit, par l'une des deux branches (3) dudit ressort (1), lorsque lesdites deux parties structurelles (16, 17) sont animées d'un pivotement l'une par rapport à l'autre.
